# EUROPÄISCHE PATENTANMELDUNG

(11) **EP 1 366 657 A1**
(43) Veröffentlichungstag der Anmeldung: **03.12.2003**
(21) Anmeldenummer: 02012108.3
(22) Anmeldetag: 31.05.2002
(51) Int. Cl.: A01K 5/01, A01K 5/02

(54) **Rundtrog zum Füttern von Schweinen und Ferkeln**

(71) Anmelder: Schwarz, Rudolf Dipl.-Ing., 84543 Winhöring (DE)
(72) Erfinder: Schwarz, Rudolf Dipl.-Ing., 84543 Winhöring (DE)
(74) Vertreter: Finck, Dieter, Dr.Ing.

(57) **Zusammenfassung**

Der Rundtrog (10) zum Füttern von Schweinen und Ferkeln hat einen ringförmigen Boden (13), der von einer Außenwand (16) und einer Innenwand (20) begrenzt wird, die in einen Futteraufnahmering (22) übergeht, der mit der zentralen Achse (12) einen Winkel (β) von 85° bis 88° bildet. Der Boden (13) ist aus einer radial äußeren Nasssohle (14a) und einer höher liegenden radial inneren Trockensohle (14b) zusammengesetzt, die durch eine Zwischenwand (24) verbunden sind, die mit der zentralen Achse (12) einen Winkel (γ) von 15° bis 45° bildet.

## Beschreibung

Die Erfindung betrifft einen Rundtrog zum Füttern von Schweinen und Ferkeln, dem zentral eine schwerkraftbeeinflusste Abgabe für ein mehlartiges bis körniges Futter und radial außen wenigstens eine Wasserzuleitung zugeordnet sind, der einen Außendurchmesser und konzentrisch zu einer zentralen Achse einen ringförmigen Boden mit einer von ihm am äußeren Umfang hochstehenden Außenwand und einer von ihm am inneren Umfang hochstehenden Innenwand aufweist, die mit der zentralen Achse einen Winkel von 3° bis 15° bildet und die an ihrem oberen Ende in einen sich bis zur zentralen Futterabgabe radial erstreckenden Futteraufnahmering übergeht, der mit der zentralen Achse einen Winkel von 85° bis 88° bildet.

Ein solcher Futtertrog ist aus dem DE 299 12 107 U1 bekannt. Der bekannte Futtertrog hat eine erhöhte Plattform, der das Trockenfutter zugeführt wird, eine niedriger liegende Kammer und eine auf gleicher Höhe wie diese liegende Wasserkammer, der Wasser zugeführt wird. Zwischen der Kammer und der Wasserkammer ist eine Trennwand vorgesehen, deren Höhe so bemessen ist, dass Wasser überlaufen und in die Kammer hinabrinnen kann. In der Kammer kommt das Wasser in Kontakt mit dem Trockenfutter und weicht dieses zu Nassfutter auf. Die erhöhte Plattform für das Trockenfutter ist als Kegelstumpf ausgebildet, dessen Oberseite sich unter die Futtermittelabgabe erstreckt. Die Kegelstumpfflächen sind nach unten zu der Nassfutterkammer geneigt. Der Futtertrog ist von einer Außenwand umgeben, deren obere Kante sich oberhalb der erhöhten Plattform für das Trockenfutter erstreckt und die außenseitig zwei Wasserkammern begrenzt, die voneinander getrennt sind und bezüglich dem zwischen der Trennwand und der erhöhten Plattform gebildeten ringförmigen Boden einander diametral gegenüberliegen.

Die Futterabgabe in Form eines Rohrs endet in einem Abstand über der Plattform, so dass das Futter in einem Ringspalt aus der Abgabe austritt und auf die nach unten geneigte Kegelstumpffläche gelangt und von dieser entlang auf den ringförmigen Boden rinnt und fällt. Das auf dem Boden befindliche Trockenfutter wird in dem radial äußeren Bereich von über Rillen in der Trennwand aus den Wasserkammern überlaufendem Wasser befeuchtet, so dass sich Nassfutter bildet. Dieser Überlauf wird durch einen ausreichenden Wasserzulauf in den Wasserkammern ausgelöst, wobei in der Außenwand eine Absenkung für den Wasserüberlauf vorgesehen ist, wenn der Wasserspiegel in der Wasserkammer höher wird als die Trennwand. Die Schweine und Ferkel können dabei aus den radial diametral gegenüberliegenden äußeren Wasserkammern Wasser trinken, im Bereich des ringförmigen Bodens Nassfutter aufnehmen und von der Kegelstumpffläche herabrinnendes Trockenfutter fressen.

Bei dem bekannten Futtertrog besteht die Möglichkeit, dass aus dem sehr nassem Futter auf dem Boden bei hohem Nassfutterpegel Feuchtigkeit durch Kapillarwirkung oder als Spritzwasser auf die kegelstumpfförmige Trockenfutterfläche gelangt, was zu einem Verstopfen der Futterabgabe führen kann. Obwohl für die Schweine und Ferkel die Möglichkeit der Aufnahme von reinem Wasser aus den Wasserkammern, von Nassfutterbrei zwischen Trennwand und Kegelstumpf und von Trockenfutter auf der Kegelstumpffläche besteht, erscheint die Trennung von Nassfutter und Trockenfutter als unzureichend, da davon auszugehen ist, dass der Nassfutterbereich durch das über die Trennwand laufende Wasser immer voll ist. Dadurch ist auch das Futter durchgehend extrem nass.

Die der Erfindung zugrundeliegende Aufgabe besteht deshalb darin, den Rundtrog der gattungsgemäßen Art so auszugestalten, dass bei Ausschließen einer Verstopfungsgefahr an der Futterabgabe, eine Aufnahme von Nassfutter mit differenzierter Wasserkonzentration, Trockenfutter und Wasser innerhalb einer voll konzentrischen Troganordnung möglich ist.

Diese Aufgabe wird bei dem Rundtrog der gattungsgemäßen Art dadurch gelöst, dass der ringförmige Boden aus einer radial äußeren Nasssohle und einer höher liegenden radial inneren Trockensohle zusammengesetzt ist, die durch eine Zwischenwand verbunden sind, die mit der zentralen Achse einen Winkel von 15° bis 45° bildet.

Der erfindungsgemäße Rundtrog erlaubt es den Schweinen und Ferkeln, jeweils in gleicher Entfernung von der Außenwand auf der Trockensohle das Trockenfutter und auf der tieferliegenden Nasssohle den Nassbrei mit radial abgestufter Wasserkonzentration und gegebenenfalls pures Wasser aufzunehmen. Da die Futterabgabe nochmals oberhalb der Trockensohle liegt, ist die Gefahr einer wasserbedingten futterabgabeseitigen Verstopfung beseitigt.

Bei dem erfindungsgemäßen Rundtrog gelangt das mehlartige bis körnige Futter, wie vorher beschrieben, auf den leicht nach unten geneigten Futteraufnahmering. Das Futter rinnt langsam nach und gelangt an die steil geneigte Innenwand, längs derer es auf die Trockensohle rinnt, wo es die Schweine und Ferkel als trockenes Futter aufnehmen können, bevor es über die weniger steil geneigte Zwischenwand zur Nasssohle rinnt und dort mit dem auf der Nasssohle befindlichen Wasser einen Futterbrei bildet, dessen Feuchtekonsistenz radial nach außen hin zunimmt. Die Schweine und Ferkel können also je nach Bedürfnis das Futter sehr nass bis ganz trocken aufnehmen und auch Wasser pur trinken.

Die Nasssohle hat vorzugsweise eine radiale Erstreckung, die das 0,07- bis 0,125-fache des Außendurchmessers beträgt, wodurch die Trockensohle vorteilhafterweise eine radiale Erstreckung hat, die das 0,025- bis 0,125-fache des Außendurchmessers ausmacht.

Die Außenwand des Rundtrogs hat zweckmäßigerweise eine Höhe, die das 0,10- bis 0,25-fache des Außendurchmessers beträgt. Die Innenwand kann eine Höhe haben, die das 0,06- bis 0,07-fache des Außendurchmessers beträgt. Die radiale Erstreckung des Futteraufnahmerings liegt vorzugsweise beim 0,04- bis 0,10-fachen des Außendurchmessers. Die Höhe der Zwischenwand beträgt vorteilhafterweise das 0,02- bis 0,08-fache des Außendurchmessers.

Wenn von den Schweinen oder Ferkeln außerhalb des Rundtrogs Futter abtropft, fällt es auf den Stallbeton, verschmutzt diesen und kann ihn aufgrund des sauren pH-Werts des Futters korrodieren lassen. Um dies zu vermeiden kann am Außenumfang des Rundtrogs bodenseitig und in etwa mit Bodenstärke einstückig ein Außentrog angeformt werden, der eine ringförmige horizontale Standfläche und einen äußeren Begrenzungswulst hat, wobei die radiale Erstreckung des Außentrogs das 0,2- bis 0,3-fache des Außendurchmessers des Rundtrogs beträgt. Bei dieser Ausgestaltung haben die Schweine und Ferkel eine gute Standfläche und, falls Futter beim Fressen abtropft, gelangt es auf den Außentrog. Dies verringert Futterverluste.

Zur Verbesserung der Futterabgabe setzt sich vorzugsweise der Futteraufnahmering innerhalb der Projektion der zentralen Futterabgabe auf dem Rundtrog fort und geht in einen zentralen, sich vom Boden weg verjüngenden Ablaufkegel über.

Damit gewährleistet ist, dass die Schweine und Ferkel aus dem Rundtrog auch Wasser ohne Futterbrei aufnehmen können, kann die Nasssohle bezogen auf die zentrale Achse im radial inneren Bereich einen im Wesentlichen horizontalen Bodenabschnitt aufweisen, an den ein radial äußerer Bodenabschnitt angrenzt, der bezüglich des inneren Bodenabschnitts tiefer angeordnet ist. Da sich die Wasserzuleitungen im radial äußeren Bereich in der Nähe der Außenwand befinden, sammelt sich in dem tiefergelegenen Bodenabschnitt Wasser und auf dem radial nach innen angrenzenden horizontalen Bodenabschnitt Nassfutter.

Es hat sich als vorteilhaft erwiesen, wenn der horizontale Bodenabschnitt im Wesentlichen die gleiche radiale Erstreckung wie der tiefergelegene Bodenabschnitt hat.

Die radial äußere Wasseraufnahme lässt sich auch durch die Modifizierung erreichen, gemäß der sich die Nasssohle ausgehend von der Zwischenwand mit einer Winkelneigung von 75° bis 85° bezüglich der zentralen Achse zur Außenwand hin absenkt.

Anhand von Zeichnungen werden Ausführungsbeispiele der Erfindung näher erläutert.
- Fig. 1: zeigt schematisch einen Axialschnitt durch einen Rundtrog.
- Fig. 2: zeigt in einer Ansicht wie Fig. 1 vergrößert die rechte Hälfte des Rundtrogs von Fig. 1.
- Fig. 3: zeigt in einer Ansicht wie Fig. 2 den Rundtrog mit einer ersten Modifizierung der Nasssohle.
- Fig. 4: zeigt in einer Ansicht wie Fig. 2 den Rundtrog mit einer zweiten Modifizierung der Nasssohle.

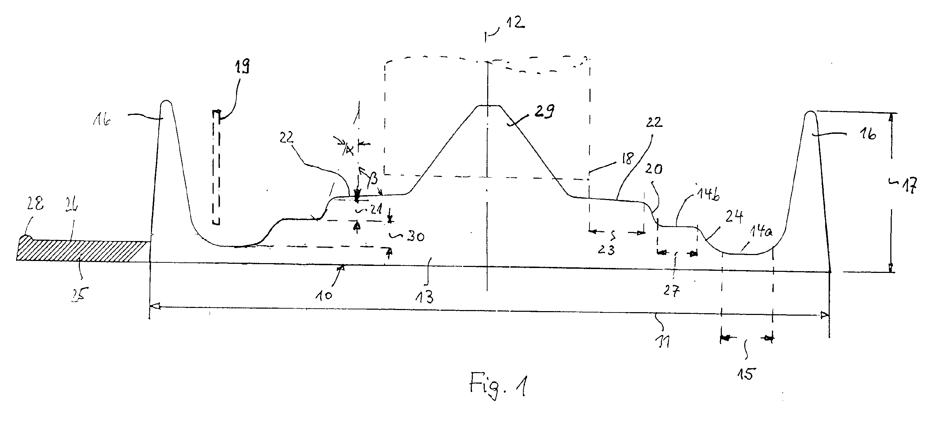

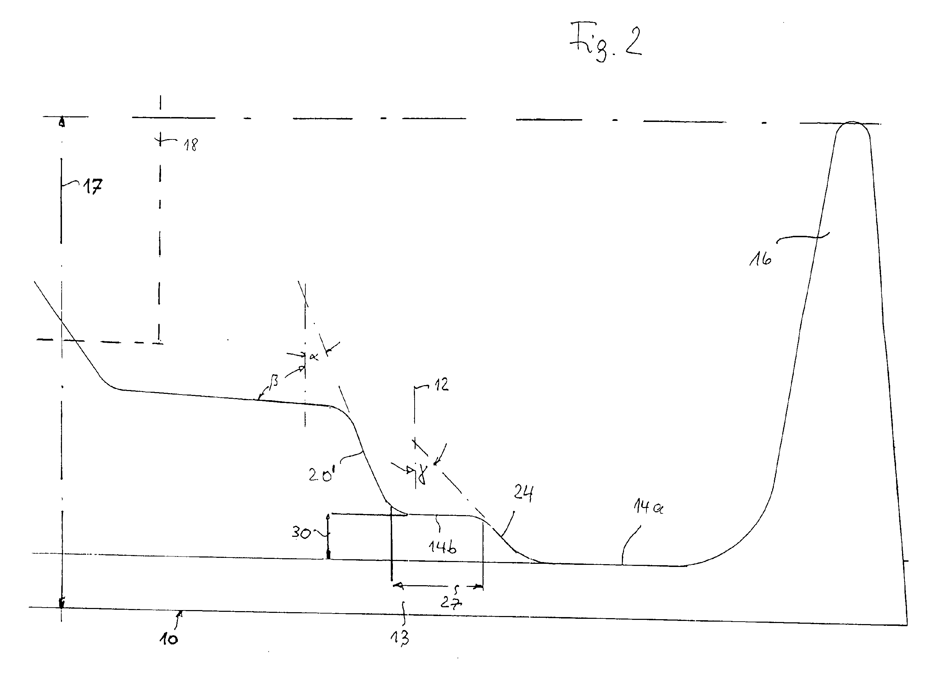

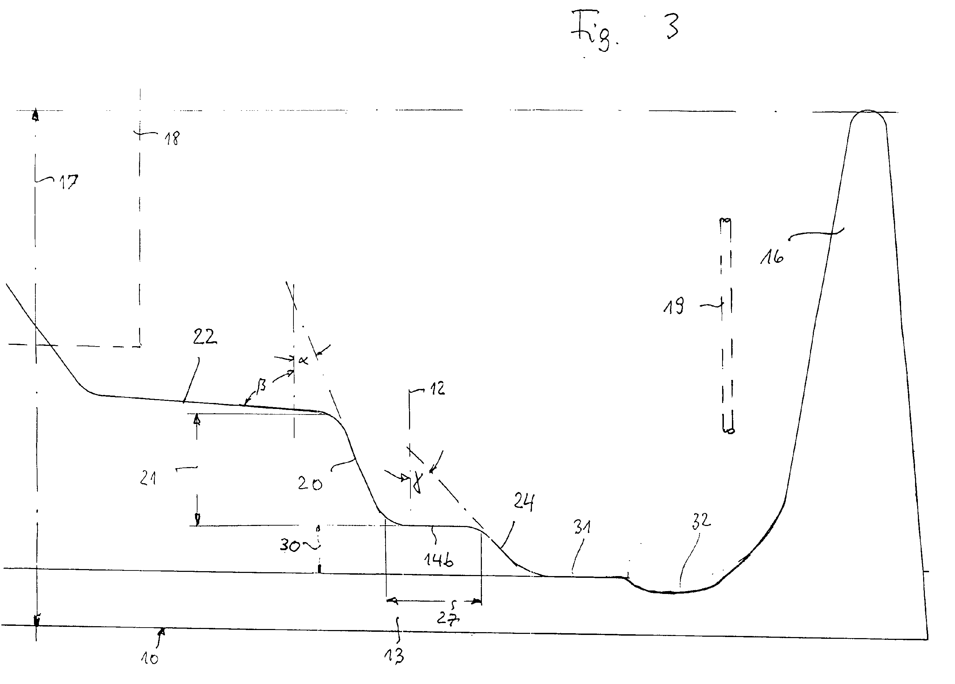

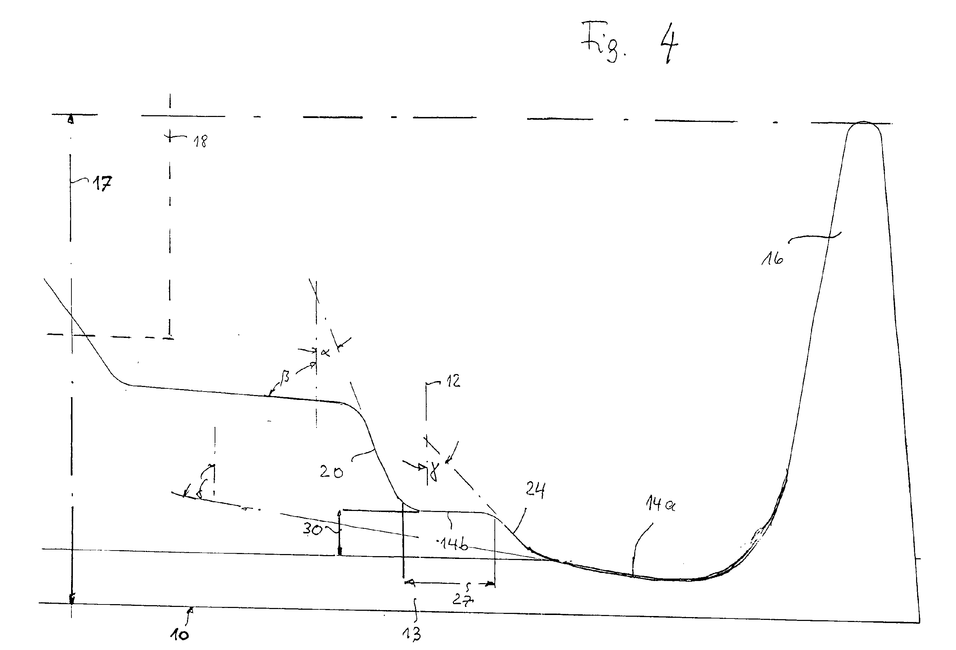

Der in Fig. 1 gezeigte Rundtrog 10 hat eine im Wesentlichen zylindrische Form mit einem Außendurchmesser 11 von 50 cm bis 100 cm, vorzugsweise 60 cm, und einer zentralen Achse 12. Der Rundtrog 10 ist aus einem mit Kunstharz gebundenen Beton hergestellt und hat einen ringförmigen Boden 13 und eine am äußeren Umfang des Bodens 13 einstückig angeformte Außenwand 16 mit einer Höhe 17. Die Außenwand ist vom Boden 13 weg auf beiden Seiten sich verjüngend ausgebildet und hat an ihrem oberen Rand eine abgerundete Kuppe. Der Boden 13 hat eine ebene durchgehende oder ringförmige Standfläche.

Dem Rundtrog 10 ist koaxial zur Achse 12 eine Futterabgabe 18 zugeordnet, die in Fig. 1 und 2 gestrichelt eingezeichnet ist. Die Futterabgabe 18 hat die Form eines zur Achse 12 koaxialen Rohres, das in einem einstellbaren vertikalen Abstand zu einem Futteraufnahmering 22 angeordnet ist.

Bündig zu der Standfläche des Bodens 13 ist außen um die Außenwand 16 herum etwa mit der Stärke des Bodens 13 ein Außentrog 25 angeformt, der eine Standfläche 26 und an seinem Außenrand einen Begrenzungswulst 28 aufweist.

Der ringförmige Boden 13 weist eine Nasssohle 14a, oberhalb derer in der Nähe der Außenwand 16 eine oder mehrere Zuleitungen 19 für Wasser vorgesehen sind, die auch Betätigungsnippel aufweisen können, und eine höhergelegene Trockensohle 14b auf. Die Nasssohle 14a und die Trockensohle 14b sind durch eine Zwischenwand 24 verbunden, die zur zentralen Achse 12 in einem Winkel γ radial nach innen zur Achse 12 hin und nach oben geneigt ist. Die Trockensohle 14b hat eine radiale Erstreckung 27 und verläuft im Wesentlichen horizontal mit einer Höhe 30 über der Nasssohle 14a. Die Trockensohle 14b geht in eine Innenwand 20 mit einer Höhe 21 über, die mit der zentralen Achse 12 einen Winkel α bildet und an die sich radial nach innen erstreckend der Futteraufnahmering 22 anschließt. Der Futteraufnahmering 22 geht innerhalb der Futterabgabe 18 in einen sich vom Boden 13 weg nach oben verjüngenden Ablaufkegel 29 über, der zur Begünstigung des Austritts des Futters aus der Futterabgabe 18 durch den Ringspalt beiträgt, der von dem Futteraufnahmering 22 und dem Abgabeende der Futterabgabe 18 gebildet wird. Der Futteraufnahmering 22 bildet mit der zentralen Achse 12 einen Winkel β.

In der nachstehenden Tabelle sind die Abmessungsbereiche der wesentlichen, in Spalte 1 aufgeführten Abmessungen des Rundtrogs 10 angegeben und zwar in Spalte 2 als Faktor des Außendurchmessers AD bzw. als Neigungswinkel zur zentralen Achse 12 und in Spalte 3 bezogen auf den Außendurchmesserbereich von 50 bis 100 cm und in der letzten Spalte bezogen auf den bevorzugten Außendurchmesser von 60 cm.

| | | | |
|---|---|---|---|
| Höhe 17 der Außenwand 16 | (0,1 bis 0,25) AD | 5 bis 25 cm | 15 cm |
| Radiale Erstreckung 15 der Sohle 14a | (0,075 bis 0,125) AD | 3,75 bis 12,5 cm | 5 cm |
| Höhe 21 der Innenwand 20 | (0,06 bis 0,07) AD | 3 bis 7 cm | 5 cm |
| Neigungswinkel α der Innenwand 20 | 3° bis 15° | | |
| Radiale Erstreckung 23 des Futteraufnahmerings 22 bis zur Futterabgabe 18 | (0,04 bis 0,1) AD | 2 bis 10 cm | 4 cm |
| Neigungswinkel β des Futteraufnahmerings 22 | 85° bis 88° | | |
| Höhe 30 der Zwischenwand 24 | (0,02 bis 0,08) AD | 1 bis 8 cm | 2 cm |
| Neigungswinkel γ der Zwischenwand 24 | 15° bis 45° | | |
| Radiale Erstreckung 27 der Trockensohle 14b | (0,025 bis 0,125) AD | 1,25 bis 12,5 cm | 5 cm |
| Radiale Erstreckung des Außentrogs 25 | (0,2 bis 0,3) AD | 10 bis 30 cm | 12 cm |

Das aus dem Spalt zwischen der Futterabgabe 18 und dem Futteraufnahmering 22 austretende mehlartige bis körnige Futter rinnt langsam aufgrund der geringen Neigung des Futteraufnahmerings 22 von 2° bis 5° zur Horizontalen zur Innenwand 20. Über die Innenwand 20 mit der starken Neigung zur zentralen Achse 12 von 3° bis 15° "fällt" das Futter in den Bereich der Trockensohle 14b. Die Übergänge zwischen den Wänden und Flächen sind entsprechend abgerundet.

Das Futter auf der Trockensohle 14b ist trocken und rinnt über die weniger stark geneigte Zwischenwand 24 zur Nasssohle 14a, wo es mit Wasser in Kontakt kommt. Dadurch können die Schweine oder Ferkel im Bereich der Trockensohle 14b trockenes Futter aufnehmen und im Bereich der Nasssohle 14a radial innen Futterbrei mit radial nach außen zunehmendem Wassergehalt und radial außen Wasser aufnehmen.

Wie in Fig. 3 gezeigt ist, ist die Nasssohle so modifiziert, dass sie angrenzend an die Zwischenwand 24 einen horizontalen Bodenabschnitt 31 aufweist, der zur Außenwand 16 hin in einen vertieften Bodenabschnitt 32 übergeht, dem die Wasserzuleitung 19 zugeordnet ist und der die gleiche radiale Erstreckung wie der horizontale Bodenabschnitt 31 hat. Die Schweine und Ferkel können im Bereich des vertieften Bodenabschnitts 32 Wasser aufnehmen, im Bereich des etwas höher liegenden horizontalen Abschnitts 31 Futter in Form des Nassbreis, dessen Wassergehalt von der Zwischenwand 24 zum vertieften Bodenabschnitt 32 hin zunimmt, und Trockenfutter auf der höhergelegenen Trockensohle 14b sowie auch von dem Futteraufnahmering 22.

Die in Fig. 4 gezeigte Modifizierung unterscheidet sich von der von Fig. 3 dadurch, dass sich die Nasssohle 14a von der Zwischenwand 24 zur Außenwand 16 unter einem mit der zentralen Achse 12 gebildeten Winkel δ von 75° bis 85° absenkt, so dass sich auf der Nasssohle 14a ausgehend von der Zwischenwand 24 relativ trockenes Futter befindet, das zur Außenwand 16 hin immer breiiger wird, wobei angrenzend an die Außenwand 16 im Wesentlichen Wasser ohne Futter zur Verfügung steht.

### Bezugszeichenliste

- 10: Rundtrog
- 11: Außendurchmesser
- 12: zentrale Achse
- 13: Boden
- 14a: Nasssohle
- 14b: Trockensohle
- 15: radiale Erstreckung der Nasssohle
- 16: Außenwand
- 17: Höhe der Außenwand
- 18: zentrale Futterabgabe
- 19: Zuleitung für Wasser
- 20: Innenwand (α)
- 21: Höhe der Innenwand
- 22: Futteraufnahmering (β)
- 23: radiale Erstreckung des Futteraufnahmerings
- 24: Zwischenwand (γ)
- 25: Außentrog
- 26: Standfläche
- 27: radiale Erstreckung der Trockensohle
- 28: Begrenzungswulst
- 29: Ablaufkegel
- 30: Höhe der Zwischenwand
- 31: horizontaler Abschnitt
- 32: tiefergelegener Abschnitt

## Patentansprüche

1. Rundtrog zum Füttern von Schweinen und Ferkeln, dem zentral eine schwerkraftbeeinflusste Abgabe (18) für ein mehlartiges bis körniges Futter und radial außen wenigstens eine Wasserzuleitung (19) zugeordnet sind, der einen Außendurchmesser (11) und konzentrisch zu einer zentralen Achse (12) einen ringförmigen Boden (13) mit einer von ihm am äußeren Umfang hochstehenden Außenwand (16) und einer von ihm am inneren Umfang hochstehenden Innenwand (20) aufweist, die mit der zentralen Achse (12) einen Winkel (α) von 3° bis 15° bildet und die an ihrem oberen Ende in einen sich bis zur zentralen Futterabgabe radial erstreckenden Futteraufnahmering (22) übergeht, der mit der zentralen Achse (12) einen Winkel (β) von 85° bis 88° bildet, **dadurch gekennzeichnet, dass** der ringförmige Boden (13) aus einer radial äußeren Nasssohle (14a) und einer höher liegenden radial inneren Trockensohle (14b) zusammengesetzt ist, die durch eine Zwischenwand (24) verbunden sind, und dass die Zwischenwand (24) mit der zentralen Achse (12) einen Winkel (γ) von 15° bis 45° bildet.

2. Rundtrog nach Anspruch 1, **dadurch gekennzeichnet, dass** die Nasssohle (14a) eine radiale Erstreckung (15) hat, die das 0,07- bis 0,125-fache des Außendurchmessers (11) beträgt.

3. Rundtrog nach Anspruch 1 oder 2, **dadurch gekennzeichnet, dass** die Trockensohle (14b) eine radiale Erstreckung (28) hat, die das 0,025- bis 0,125-fache des Außendurchmessers (11) ausmacht.

4. Rundtrog nach einem der vorhergehenden Ansprüche, **dadurch gekennzeichnet, dass** die Außenwand (16) eine Höhe (17) aufweist, die das 0,10- bis 0,25-fache des Außendurchmessers (11) beträgt.

5. Rundtrog nach einem der vorhergehenden Ansprüche, **dadurch gekennzeichnet, dass** die Innenwand (20) eine Höhe (21) hat, die das 0,06- bis 0,07-fache des Außendurchmessers (11) beträgt.

6. Rundtrog nach einem der vorhergehenden Ansprüche, **dadurch gekennzeichnet, dass** die radiale Erstreckung (23) des Futteraufnahmerings (22) das 0,04- bis 0,10-fache des Außendurchmessers (11) beträgt.

7. Rundtrog nach einem der vorhergehenden Ansprüche, **dadurch gekennzeichnet, dass** die Zwischenwand (24) eine Höhe (30) hat, die das 0,02- bis 0,08-fache des Außendurchmessers (11) beträgt.

8. Rundtrog nach einem der vorhergehenden Ansprüche, **gekennzeichnet durch** einen in einem Stück angeformten Außentrog (25) mit einer ringförmigen horizontalen Standfläche (26) und einem äußeren Begrenzungswulst (27), wobei die radiale Erstreckung des Außentrogs (25) das 0,2- bis 0,3-fache des Außendurchmessers (11) beträgt.

9. Rundtrog nach einem der vorhergehenden Ansprüche, **dadurch gekennzeichnet, dass** sich der Futteraufnahmering (22) innerhalb der Projektion der zentralen Futterabgabe (18) auf dem Rundtrog fortsetzt und in einen zentralen, sich vom Boden weg verjüngenden Ablaufkegel (29) übergeht.

10. Rundtrog nach einem der vorhergehenden Ansprüche, **dadurch gekennzeichnet, dass** die Nasssohle (14a) bezogen auf die zentrale Achse (12) im radial inneren Bereich einen im Wesentlichen horizontalen Bodenabschnitt (31) aufweist, an den ein radial äußerer Bodenabschnitt (32) angrenzt, der bezüglich des inneren Bodenabschnitts (31) tiefer angeordnet ist.

11. Rundtrog nach Anspruch 10, **dadurch gekennzeichnet, dass** der horizontale Bodenabschnitt (31) im Wesentlichen die gleiche radiale Erstreckung wie der tiefergelegene Bodenabschnitt (32) hat.

12. Rundtrog nach einem der Ansprüche 1 bis 9, **dadurch gekennzeichnet, dass** sich die Nasssohle (14a) ausgehend von der Zwischenwand (24) mit einer Winkelneigung (δ) von 75° bis 85° bezüglich der zentralen Achse (12) zur Außenwand (16) hin absenkt.
